# EUROPÄISCHE PATENTANMELDUNG

(11) **EP 1 184 229 A2**
(43) Veröffentlichungstag der Anmeldung: **06.03.2002**
(21) Anmeldenummer: 01118876.0
(22) Anmeldetag: 16.08.2001
(51) Int. Cl.: B60R 13/10, B60R 11/00

(54) **Verfahren zum Befestigen einer elektronischen Identifikationseinrichtung an einem Fahrzeug sowie Identifikationseinrichtung**

(30) Priorität: 01.09.2000 DE 10043168
(71) Anmelder: Harting Automotive GmbH & Co. KG, 32339 Espelkamp (DE)
(72) Erfinder: Leve, Ludger, 32369 Rahden (DE)
(74) Vertreter: Kitzhofer, Thomas, Dipl.-Ing.

(57) **Zusammenfassung**

Eine Identifikationseinrichtung (3), vorzugsweise mit einem Identifikationsmittel (7) in Form eines TAGs, wird durch ein Verfahren in zwei Schritten an der Fahrzeugkarosse bleibend befestigt. Im ersten Schritt wird vor dem Lackieren der Karosse (23) über einen Abstandshalter (13) die Identifikationseinrichtung (3) so befestigt, daß ein vollständiges Lackieren möglich ist. Im nächsten Schritt wird, ohne daß zwischenzeitlich die Identifikationseinrichtung von der Karosse gelöst wurde, das Identifikationsmittel (7) mittels einer Einweg-Rastverbindung an der Karosse (23) befestigt.

## Beschreibung

Die Erfindung betrifft ein Verfahren zum Befestigen einer elektronischen Identifikationseinrichtung, die ein elektronisches Identifikationsmittel aufweist, an einer Fahrzeugkarosse.

Darüber hinaus betrifft die Erfindung eine elektronische Identifikationseinrichtung zur Befestigung an einer Fahrzeugkarosse.

Fahrzeugkarossen sollen bereits im Werk des Fahrzeugherstellers, während der Montage des Fahrzeugs, ständig eindeutig identifizierbar sein. Aus diesem Grund sind bislang sogenannte "bar codes" an der Karosse unmittelbar nach ihrer Herstellung befestigt. Diese sind teilweise an schwer zugänglichen Stellen untergebracht und müssen mit einem Hand-Scanner in jeder Montagestation eingelesen werden. Um dieses Einlesen zu vereinfachen, besteht der Wunsch, eine elektronische Identifikationseinrichtung, die beispielsweise ein Identifikationsmittel in Form eines Speicherchips (TAG) aufweist, zu verwenden, um zum Beispiel mittels eines Transponders eine Fernabfrage zur Identifikation der Karosse zu ermöglichen.

Ein solcher Einsatz einer elektronischen Identifikationseinrichtung wurde bislang jedoch nicht umgesetzt, da die Karosse verschiedene Fertigungsschritte, unter anderem zum Beispiel Galvanisieren oder Lackieren, durchlaufen muß, bei denen eine elektronische Identifikationseinrichtung nur hinderlich wäre.

Aufgabe der Erfindung ist es deshalb, ein Verfahren zu schaffen, mit dem der Einsatz einer elektronischen Identifikationseinrichtung im Herstellungsprozeß der Karosse ermöglicht wird.

Dies wird durch ein spezielles Verfahren zum Befestigen einer elektronischen Identifikationseinrichtung mit folgenden Schritten erreicht:
a) Die Identifikationseinrichtung wird vor dem Lackieren, falls ein Galvanisieren vorgesehen ist, möglichst auch vor dem Galvanisieren der Karosse, mittels eines Abstandshalters an der Karosse so befestigt, daß die Identifikationseinrichtung von der Karosse beabstandet ist.
b) Die Identifikationseinrichtung wird, ohne von der Karosse zwischenzeitlich gelöst zu werden, nach dem Galvanisieren bzw. Lackieren der Karosse an der Karosse fest arretiert.

Das erfindungsgemäße Befestigungsverfahren sieht vor, daß die Karosse unmittelbar nach ihrer Herstellung, das heißt vor dem Galvanisieren oder Lackieren, mit der Identifikationseinrichtung über den Abstandshalter bleibend verbunden wird, wobei der Abstandshalter nur zeitweise, nämlich unter anderem während des Galvanisierens/Lackierens, im Einsatz ist, um zu verhindern, daß die Identifikationseinrichtung an der Karosse anliegt, was ein vollständiges Lackieren oder Galvanisieren der Karosse unmöglich machen würde. Nur der kleine Abstandshalter ist in Kontakt mit der Karosse. Anschließend jedoch wird die Identifikationseinrichtung bleibend an der Karosse arretiert, vorzugsweise nichtlösbar, das heißt nur durch Zerstörung lösbar.

Falls die Identifikationseinrichtung aus mehreren, lösbar miteinander verbundenen Teilen besteht, wird vorzugsweise im Schritt a) das Identifikationsmittel selbst bleibend an der Karosse arretiert.

Der Abstandshalter ist beispielsweise ein biegesteifes Kunststoffband oder eine biegesteife Kunststoffschnur. Darüber hinaus ist die Identifikationseinrichtung an einer solchen Stelle an der Karosse befestigt, daß sie beim Lackieren von der Karosse herabhängt. Das biegesteife Kunststoffband oder die Kunststoffschnur verhindern, daß beim Bewegen der Karosse während des Lackierens oder Galvanisierens die Identifikationseinrichtung an der Karosse anschlägt.

Eine Ausführungsform sieht vor, daß im Schritt b) über eine Einweg-Rastverbindung das Identifikationsmittel an der Karosse arretiert wird. Die Einweg-Rastverbindung soll ein Lösen der Arretierung ausschließen, zugleich aber ein schnelles Arretieren ermöglichen.

Um die Kosten für die Identifikationseinrichtung zu reduzieren, ist vorgesehen, daß ein sehr einfach und billig aufgebautes Identifikationsmittel lösbar mit einem Transponder, der Teil der Identifikationseinrichtung ist, gekoppelt wird. Die dann entstehende Einheit wird im Schritt a) an der Karosse befestigt. Der Transponder, der relativ teuer sein kann und auch ein höheres Bauvolumen aufweisen kann, wird vorzugsweise nach Fertigstellung des Fahrzeugs vom Identifikationsmittel getrennt und ist wiederverwendbar.

Ein Einmal-Schutzgehäuse soll den Transponder nach außen hin abschirmen, insbesondere während des Galvanisierens oder des Lackierens. In einem Schritt c) werden das Schutzgehäuse und der Transponder vom Identifikationsmittel entfernt, und der Transponder wird wiederverwendet, indem er auf ein anderes Identifikationsmittel aufgesetzt und mit ihm gekoppelt wird.

Die Erfindung betrifft, wie bereits erwähnt, auch eine elektronische Identifikationseinrichtung, die an einer Fahrzeugkarosse mittels des erwähnten Verfahrens befestigt werden kann, wobei die Fahrzeugkarosse eine Montageöffnung zur Befestigung der Identifikationseinrichtung hat. Die erfindungsgemäße Identifikationseinrichtung hat ein Identifikationsmittel und einen Abstandshalter, der zeitweise die Identifikationseinrichtung an der Karosse hält. Der Abstandshalter hat eine Befestigung, das heißt ein Befestigungsmittel, zur Arretierung des Abstandshalters an der Karosse. Darüber hinaus ist eine nichtlösbare Befestigung an der Identifikationseinrichtung zur festen Arretierung der Identifikationseinrichtung unmittelbar an der Karosse vorgesehen. Die Identifikationseinrichtung hat also zwei Befestigungen, die zeitlich nacheinander verwendet werden und die für einen unterschiedlichen Abstand der Identifikationseinrichtung zur Karosse sorgen. Ist der Abstandshalter im Einsatz, liegt der Rest der Identifikationseinrichtung nicht an der Karosse an. Anschließend jedoch kann über die nichtlösbare Befestigung die Identifikationseinrichtung, ohne vorher von der Karosse gelöst zu werden, fest und unmittelbar an dieser arretiert werden.

Wenn eine Einweg-Rastverbindung vorgesehen ist, über die die Identifikationseinrichtung, vorzugsweise unmittelbar das Identifikationsmittel selbst, fest an der Karosse arretiert wird, kann diese Rastverbindung zum Beispiel als Bajonettverschluß ausgebildet sein. Der Bajonettverschluß erlaubt ein schnelles Ankoppeln der Identifikationseinrichtung an der Karosse durch Andrücken und Drehen. Der Bajonettverschluß besteht aus Zähnen an dem die Montageöffnung umgebenden Rand und Gegenzähnen am Identifikationsmittel, wobei die Zähne und Gegenzähne so aufeinander abgestimmt sein sollten, daß sie nach dem Arretieren gegenseitig verrasten und ein Bewegen des Identifikationsmittels in Löserichtung verhindern.

Wenn die Zähne und Gegenzähne so aufeinander abgestimmt sind, daß sie nach dem Verrasten axial vorgespannt aneinander anliegen, liegt das Identifikationsmittel axial vorgespannt an der Karosse an und kann nicht klappern.

Gemäß der bevorzugten Ausführungsform hat die Identifikationseinrichtung einen lösbar mit dem Identifikationsmittel verbundenen Transponder zum Auslesen der Daten auf dem Identifikationsmittel sowie ein den Transponder umgebendes Schutzgehäuse, wobei diese Teile eine Einheit bilden. Das Schutzgehäuse ist vorteilhafterweise über eine Schraub-Rastverbindung mit dem Identifikationsmittel verbunden, so daß zwischen Schutzgehäuse und Identifikationsmittel der Transponder liegt. Die Schraub-Rastverbindung und die Einweg-Rastverbindung in Form des Bajonettverschlusses sind dabei so ausgebildet, daß diese beiden Verbindungen entgegengesetzte Schließ-Drehrichtungen haben. Damit kann die Identifikationseinrichtung in die Montageöffnung eingesetzt und in eine Richtung gedreht werden, um ein Verrasten zu erzielen, und anschließend wird das Schutzgehäuse einfach in die Gegenrichtung gedreht, um das Schutzgehäuse samt Transponder vom Identifikationsmittel zu lösen.

Damit während des Durchlaufes des Fahrzeugs im Werk des Fahrzeugherstellers keine Sabotage betrieben werden kann, kann das Schutzgehäuse nicht zerstörungsfrei vom Identifikationsmittel gelöst werden, zum Beispiel um den Transponder zu entfernen. Eine Verriegelungslasche und eine Nocke sind so aufeinander abgestimmt, daß die Verriegelungslasche beim Entfernen des Schutzgehäuses vom Identifikationsmittel zerstört wird.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Explosionsansicht einer erfindungsgemäßen Identifikationseinrichtung für Fahrzeugkarossen,
- Figur 2 eine Längsschnittansicht der erfindungsgemäßen Identifikationseinrichtung nach Figur 1, kurz vor dem Befestigen an einer Fahrzeugkarosse,
- Figur 3 die erfindungsgemäße Identifikationseinrichtung nach dem Befestigen an einer noch nicht galvanisierten und auch noch nicht lackierten Fahrzeugkarosse,
- Figur 4 die erfindungsgemäße Identifikationseinrichtung nach dem Arretieren an einer lackierten und galvanisierten Fahrzeugkarosse,
- Figur 5 eine Schnittansicht durch die Identifikationseinrichtung nach der Linie V-V in Figur 4,
- Figur 6 eine vergrößerte Ansicht des in Figur 5 mit X bezeichneten, umrahmten Bereichs,
- Figur 7 eine abgewickelte Ansicht des Schnittes längs der Linie VII-VII in Figur 6,
- Figur 8 ein vergrößertes Segment des Randes, der die Montageöffnung in der Karosse begrenzt, und
- Figur 9 eine perspektivische Detailansicht des Randes nach Figur 8.

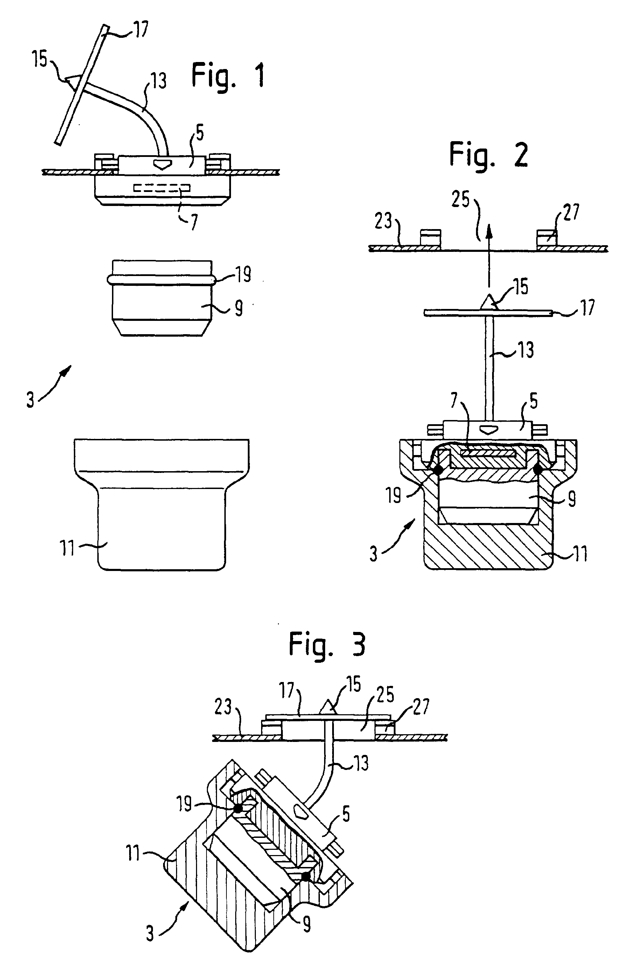

In Figur 1 ist eine elektronische Identifikationseinrichtung dargestellt, die unmittelbar nach der Herstellung einer Fahrzeugkarosse im Werk des Herstellers bereits an dieser befestigt wird. Die Identifikationseinrichtung trägt das Bezugszeichen 3 und besteht aus einem elektronischen Identifikationsmittel 5, welches einen Speicherchip 7 aufweist, auf dem Fahrzeugkenndaten abgespeichert sind, einem Transponder 9, der lösbar mit dem Identifikationsmittel 5 gekoppelt werden kann, und ein topfförmiges Einmal-Schutzgehäuse 11. Darüber hinaus ist die Identifikationseinrichtung mit einem Abstandshalter in Form eines biegesteifen Kunststoffbandes 13 versehen, das unmittelbar am Identifikationsmittel 5 nicht lösbar befestigt ist. Nicht lösbar soll im Zusammenhang mit dieser Erfindung bedeuten, daß Teile nur durch Zerstörung voneinander gelöst werden können. Anstatt eines Kunststoffbandes kann auch eine Kunststoffschnur verwendet werden. Am freien Ende 15 des Kunststoffbandes ist eine hakenförmige Spitze angeformt, die durch eine Öffnung einer flexiblen Kunststoffscheibe 17 gesteckt wurde, so daß diese beiden Teile ebenfalls nicht lösbar miteinander verbunden sind. Die Scheibe 17 ist auch nicht mehr relativ zum Kunststoffband 13 verschiebbar, da unmittelbar nach der hakenartigen Spitze eine Nut (nicht gezeigt) im Kunststoffband 13 vorgesehen ist, in die die Scheibe 17 einrastet.

Die in Figur 1 gezeigten Teile bilden eine vormontierte Einheit, nämlich die Identifikationseinrichtung 3, welche in Figur 2 montiert dargestellt ist. Zu erkennen ist, daß das Schutzgehäuse 11 den Transponder 9 umgibt und die obere, offene Seite des Schutzgehäuses 11 durch das Identifikationsmittel 5 geschlossen, vorzugsweise hermetisch dicht geschlossen ist. Ein am Umfang des Transponders 9 vorgesehener O-Ring 19 dient der Arretierung des Transponders 9 im Schutzgehäuse 11 und zugleich der Abdichtung. Der Transponder 9 wird im montierten Zustand an das Identifikationsmittel angeschlossen, so daß über den Transponder 9 eine Fernabfrage der auf dem Identifikationsmittel gespeicherten Daten möglich ist. Der Transponder 9 arbeitet vorzugsweise mit einer integrierten Batterie, um die Daten über eine größere Strecke senden zu können.

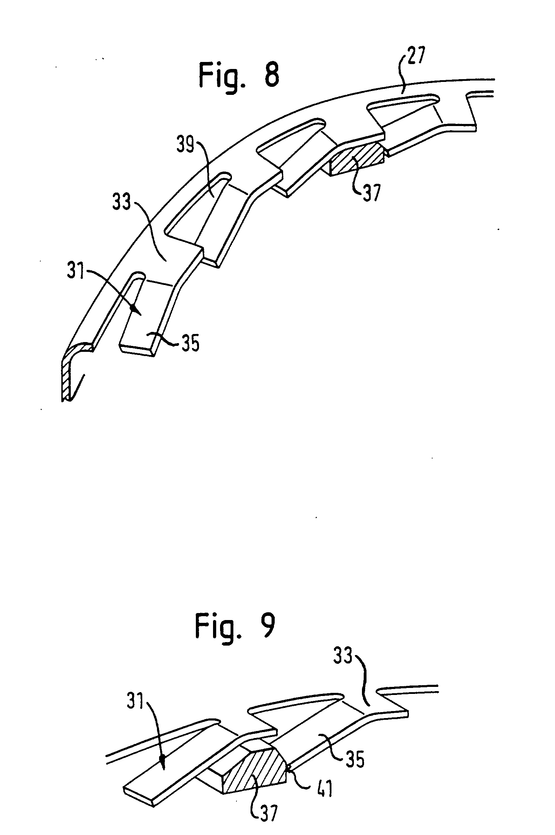

In Figur 2 ist die Fahrzeugkarosse nur ausschnittsweise in Form eines Bleches 23 dargestellt, das eine Montageöffnung 25 aufweist. Mit 27 ist der die Montageöffnung 25 umgebende Rand an der Fahrzeugkarosse 23 bezeichnet, der nur schematisch als Block dargestellt ist, da er in den Figuren 8 und 9 exakt wiedergegeben wird.

Erfindungsgemäß wird die Identifikationseinrichtung 3 möglichst frühzeitig an der Fahrzeugkarosse, jedenfalls vor dem Galvanisieren und Lackieren, an dieser lose befestigt, indem die flexible Scheibe 17 durch die Montageöffnung 25 gesteckt wird und sich dabei elastisch verformt. Nach dem Durchdringen der Montageöffnung 25 liegt die Scheibe 17 am Rand 27 lose auf.

Die Montageöffnung 25 ist an einer solchen Stelle an der Fahrzeugkarosse 23 vorgesehen, daß während des Galvanisierens und Lackierens die Identifikationseinrichtung, wie in Figur 3 gezeigt, herabhängt, ohne die Karosse 23 zu berühren. Das biegesteife Kunststoffband 13 verhindert, daß die Identifikationseinrichtung 3 bei leichten Bewegungen so stark pendelt, daß sie die Karosse 23 berührt.

Aufgrund des Abstandhalters in Form des Kunststoffbandes 13 ist die Einheit aus Schutzgehäuse 11, Transponder 9 und Identifikationsmittel 5 von der Karosse 23 beabstandet, so daß diese auch im Bereich der Montageöffnung 25 vollständig galvanisiert und lackiert werden kann. Lediglich die Auflagepunkte der Scheibe 17 könnten ggf. nicht lackiert oder galvanisiert und müßten ggf. nachbehandelt werden.

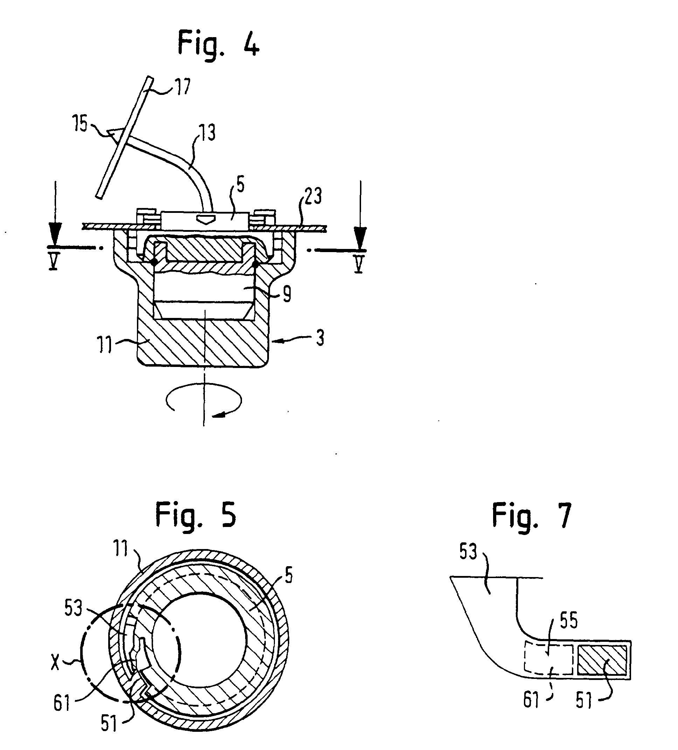

Nach dem Galvanisieren und Lackieren jedoch wird, wie in Figur 4 gezeigt, das Identifikationsmittel 5 bleibend und fest unmittelbar an der Karosse 23 befestigt, und zwar über eine Einweg- und Einmal-Rastverbindung, die als ein spezieller Bajonettverschluß ausgebildet ist. Die Rastverbindung ist in den Figuren 8 und 9 zu erkennen. Die Rastverbindung hat am gesamten Rand 27 der Montageöffnung 25 vorgesehene, umfangsmäßig aneinandergrenzende Zähne 31 in Form von freigestanzten und umgeformten radial einwärts ragenden Blechlaschen, die im wesentlichen zwei Abschnitte aufweisen, nämlich einen radial einwärts ragenden, nicht umgeformten Abschnitt 33 und einen davon ausgehenden axial gebogenen Abschnitt, der als Schräge 35 bezeichnet wird. Am Identifikationsmittel sind mehrere Gegenzähne 37 angeformt, von denen in den Figuren 8 und 9 nur ein Gegenzahn dargestellt ist.

Zum Arretieren des Identifikationsmittels 5 kann das Schutzgehäuse 11 per Hand gefaßt und gegen die Karosse 23 gedrückt werden, so daß die Gegenzähne 37 in die durch die bezüglich den Figuren 8 und 9 nach unten gebogenen Schrägen 35 gebildeten Öffnungen 39 eindringen. Die Gegenzähne drücken anschließend gegen die Schrägen 35 und drücken diese elastisch nach unten. Durch Drehen der Identifikationseinrichtung entgegen dem Uhrzeigersinn werden die Gegenzähne 37 unter den Abschnitt 33 bewegt. Nachdem der Gegenzahn 37 die Schräge 35 verlassen hat, rastet diese nach oben und liegt, wie in Figur 9 zu sehen ist, an der Rückseite 41 des entsprechenden Gegenzahns 37 an und verhindert ein Bewegen im Uhrzeigersinn zum Lösen der Verbindung.

Im arretierten Zustand sitzt das Identifikationsmittel so auf dem Rand 27 auf, daß der Gegenzahn 37 geringfügig nach oben drückt, womit das Identifikationsmittel 5 axial vorgespannt an der Karosse 23 befestigt ist.

Zwar wäre es theoretisch möglich, durch Biegen der Schrägen 35 den Weg der Gegenzähne 37 in Löserichtung freizugeben, jedoch ist die Karosse so ausgebildet und die Montageöffnung an einer solchen Stelle angeordnet, daß die Schrägen 35 rückseitig nicht zugänglich sind, wodurch eine nichtlösbare Verbindung geschaffen wird.

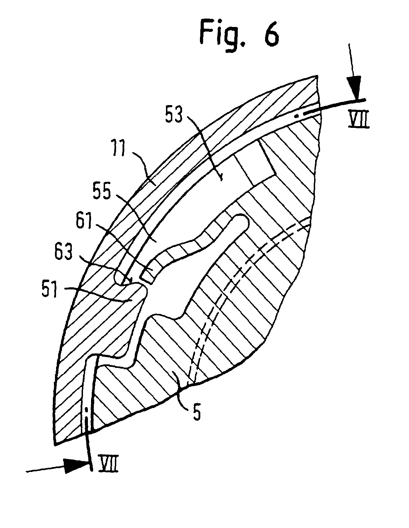

Auch das Schutzgehäuse 11 ist durch eine Rastverbindung mit dem Identifikationsmittel 5 gekoppelt. Auch diese Verbindung ist eine Art Bajonettverschluß, im folgenden wird aber allgemeiner von einer Schraub-Rastverbindung gesprochen. Diese weist, wie in den Figuren 5 und 6 zu erkennen ist, eine an der Innenseite des Schutzgehäuses 11 einstückig angeformte, radial vorstehende Nocke 51 auf, die über einen stirnseitig offenen Schacht 53 (siehe Figur 7) im Identifikationsmittel in einen angrenzenden Aufnahmeschacht 55 einführbar ist, wie Figur 7 zeigt. Von der Innenseite des Schachtes 53 ragt eine angeformte, elastische Verriegelungslasche 61 in den Aufnahmeschacht 55. Die Lasche 61 muß beim Eindrehen der Nocke 51 radial einwärts einfedern, um den Weg für die Nocke 51 freizugeben. Nachdem die Nocke 51 die Verriegelungslasche 61 passiert hat, schnappt diese in die in Figur 6 gezeigte Verriegelungsstellung zurück und verhindert ein Lösen des Schutzgehäuses 11 von dem Identifikationsmittel 5. Die in Figur 6 gezeigte Schraub-Rastverbindung und der in den Figuren 8 und 9 gezeigte Bajonettverschluß haben entgegengesetzte Schließ-Drehrichtungen. Zuerst wird das Identifikationsmittel 5 an der Karosse befestigt, indem es in eine Richtung eingedreht wird. Anschließend wird das Schutzgehäuse 11 in Löserichtung gedreht, und die Verriegelungslasche 61 wandert durch eine Schrägfläche 63 an der Nocke 51 nach außen und wird zerstört. Damit ist das Schutzgehäuse 11 von dem Identifikationsmittel 5 lösbar und kann nun nicht mehr nichtlösbar an ihm befestigt werden.

Das Fahrzeug verläßt dann mit dem Identifikationsmittel 5 den Fahrzeughersteller, wobei theoretisch auch später noch ein Transponder am Identifikationsmittel befestigt werden könnte, um dieses ferngesteuert abzufragen.

Der Transponder 9 wird aus dem Schutzgehäuse 11 entfernt und innerhalb des Werkes wiederverwendet. Lediglich das Schutzgehäuse 11 ist dann noch zu entsorgen.

Als Identifikationsmittel wird vorzugsweise ein sogenannter TAG verwendet.

## Patentansprüche

1. Verfahren zum Befestigen einer elektronischen Identifikationseinrichtung (3), die ein elektronisches Identifikationsmittel (5) aufweist, an einer Fahrzeugkarosse (23), **gekennzeichnet durch** folgende Schritte:
a) die Identifikationseinrichtung (3) wird vor dem Lackieren oder Galvanisieren der Karosse (23) mittels eines Abstandshalters an der Karosse (23) so befestigt, daß die Identifikationseinrichtung (3) von der Karosse (23) beabstandet ist,
b) die Identifikationseinrichtung (3) wird, ohne von der Karosse (23) zwischenzeitlich gelöst zu werden, nach dem Lackieren bzw. Galvanisieren der Karosse (23) an der Karosse (23) fest arretiert.

2. Verfahren nach Anspruch 1, **dadurch gekennzeichnet, daß** im Schritt a) das Identifikationsmittel (5) mit der Karosse (23) verbunden wird.

3. Verfahren nach Anspruch 1 oder 2, **dadurch gekennzeichnet, daß** als Abstandshalter ein biegesteifes Kunststoffband (13) oder eine biegesteife Kunststoffschnur mit einem Befestigungsmittel (5) verwendet wird, welches im Schritt a) in eine Montageöffnung in der Karosse (23) eingeführt wird.

4. Verfahren nach einem der vorhergehenden Ansprüche, **dadurch gekennzeichnet, daß** im Schritt b) über eine Einweg-Rastverbindung das Identifikationsmittel (5) an der Karosse (23) arretiert wird.

5. Verfahren nach einem der vorhergehenden Ansprüche, **dadurch gekennzeichnet, daß** im Schritt b) das Identifikationsmittel (5) nicht lösbar an der Karosse (23) arretiert wird.

6. Verfahren nach einem der vorhergehenden Ansprüche, **dadurch gekennzeichnet, daß** die Identifikationseinrichtung (3) einen Transponder (9) zum Auslesen der auf dem Identifikationsmittel (5) gespeicherten Daten aufweist, der lösbar mit dem Identifikationsmittel (5) gekoppelt wurde, wobei die Einheit aus Transponder (9) und Identifikationsmittel (5) im Schritt a) an der Karosse (23) befestigt wird.

7. Verfahren nach Anspruch 6, **dadurch gekennzeichnet, daß** die Identifikationseinrichtung (3) ein Einmal-Schutzgehäuse (11) für den Transponder (9) aufweist, das den Transponder (9) umgibt, und daß in einem Schritt
c) das Schutzgehäuse (11) und der Transponder (9) vom Identifikationsmittel (5) entfernt werden und der Transponder (9) wiederverwendet wird, indem er mit anderen Identifikationsmitteln gekoppelt wird.

8. Verfahren nach einem der vorhergehenden Ansprüche, **dadurch gekennzeichnet, daß** das elektronische Identifikationsmittel (5) einen Speicherchip (7) umfaßt.

9. Verfahren nach einem der vorhergehenden Ansprüche, **dadurch gekennzeichnet, daß** die Identifikationseinrichtung (3) an einer solchen Stelle an der Karosse (23) befestigt ist, daß sie beim Lackieren von der Karosse (23) herabhängt.

10. Elektronische Identifikationseinrichtung (3) zur Befestigung an einer Fahrzeugkarosse (23) mittels des Verfahrens nach einem der vorhergehenden Ansprüche,
wobei die Fahrzeugkarosse (23) eine Montageöffnung zur Befestigung der Identifikationseinrichtung (3) hat,
**dadurch gekennzeichnet, daß**
die Identifikationseinrichtung 3) ein Identifikationsmittel (5) aufweist und mit
einem Abstandshalter versehen ist,
wobei der Abstandshalter
eine Befestigung zur Arretierung des Abstandshalters an der Karosse (23) aufweist und wobei
eine nichtlösbare Befestigung zur festen Arretierung des Identifikationsmittels (5) unmittelbar an der Karosse (23) vorgesehen ist.

11. Identifikationseinrichtung (3) nach Anspruch 10, **dadurch gekennzeichnet, daß** der Abstandshalter ein Kunststoffband (13) oder eine Kunststoffschnur ist.

12. Identifikationseinrichtung (3) nach Anspruch 11, **dadurch gekennzeichnet, daß** am freien Ende der Kunststoffschnur oder des Kunststoffbandes (13) eine flexible Scheibe (17) insbesondere nicht verschieblich zum Kunststoffband (13) oder zur Kunststoffschnur befestigt ist, wobei die Scheibe so auf die Geometrie der Montageöffnung (25) abgestimmt ist, daß sie durch sie hindurchgedrückt werden kann, um den Rand (27) der Montageöffnung zu hintergreifen.

13. Identifikationseinrichtung (3) nach einem der vorhergehenden Ansprüche, **gekennzeichnet durch** eine Einweg-Rastverbindung, über die das Identifikationsmittel (5) fest an der Karosse (23) arretiert werden kann.

14. Identifikationseinrichtung (3) nach Anspruch 13, **dadurch gekennzeichnet, daß** die Einweg-Rastverbindung ein Bajonettverschluß ist, der Zähne (31) an dem die Montageöffnung (25) umgebenden Rand (27) und Gegenzähne (37) am Identifikationsmittel (5) aufweist.

15. Identifikationseinrichtung (3) nach Anspruch 14, **dadurch gekennzeichnet, daß** Zähne (31) und Gegenzähne (37) so aufeinander abgestimmt sind, daß sie nach dem Arretieren gegenseitig verrasten und ein Bewegen des Identifikationsmittels in Löserichtung verhindern.

16. Identifikationseinrichtung (3) nach Anspruch 14 oder 15, **dadurch gekennzeichnet, daß** die Zähne (31) und Gegenzähne (37) so aufeinander abgestimmt sind, daß sie nach dem Verrasten axial vorgespannt aneinander anliegen.

17. Identifikationseinrichtung (3) nach einem der Ansprüche 14 bis 16, **dadurch gekennzeichnet, daß** die Zäne (31) am Rand (27) der Montageöffnung (25) radial vorstehende Blechlaschen mit einer axialen Schräge (35) sind, wobei ein Gegenzahn (37) am Identifikationsmittel (5) entlang der Schräge (35) unter einen benachbarten Zahn (35) durch Verdrehen des Identifikationsmittels geführt werden kann und wobei der Zahn (31) mit der Schräge (35) in der arretierten Stellung den Gegenzahn (37) verrastend hintergreift.

18. Identifikationseinrichtung (3) nach einem der hervorgehenden Ansprüche,
**dadurch gekennzeichnet, daß** sie einen lösbar mit dem Identifikationsmittel (5) verbundenen Transponder (9) sowie ein den Transponder (9) umgebendes Schutzgehäuse (11) aufweist und eine vormontierte Einheit bildet.

19. Identifikationseinrichtung (3) nach Anspruch 18, **dadurch gekennzeichnet, daß** das Schutzgehäuse (11) über eine Rastverbindung mit dem Identifikationsmittel (5) verbunden ist und zwischen Schutzgehäuse (11) und Identifikationsmittel (5) der Transponder vorgesehen ist.

20. Identifikationseinrichtung (3) nach den Ansprüchen 14 und 19, **dadurch gekennzeichnet, daß** die Rastverbindung eine Schraub-Rastverbindung ist und die Schraub-Rastverbindung und der Bajonettverschluß entgegengesetzte Schließ-Drehrichtungen haben.

21. Identifikationseinrichtung (3) nach Anspruch 19 oder 20, **dadurch gekennzeichnet, daß** das Schutzgehäuse (11) über eine Schraub-Rastverbindung mit dem Identifikationsmittel (5) verbunden ist und die Schraub-Rastverbindung eine Nocke (51) und eine Verriegelungslasche (61) für die Nocke (51) aufweist, wobei die Verriegelungslasche so auf die Nocke (51) abgestimmt ist, daß sie beim Lösen des Schutzgehäuses (11) vom Identifikationsmittel (5) zerstört wird.
